Europäisches Patentamt

European Patent Office

Office européen des brevets

(11) Veröffentlichungsnummer: **0 496 069 A1**

# EUROPÄISCHE PATENTANMELDUNG

(21) Anmeldenummer: **91121238.9**

(22) Anmeldetag: **11.12.91**

(51) Int. Cl.5: **A01F 15/08**, A01F 15/07

(30) Priorität: **31.12.90 DE 4042246**

(43) Veröffentlichungstag der Anmeldung:
**29.07.92 Patentblatt 92/31**

(84) Benannte Vertragsstaaten:
**DE ES FR GB IT NL**

(71) Anmelder: **DEERE & COMPANY**
**1 John Deere Road**
**Moline, Illinois 61265(US)**

(72) Erfinder: **Viaud, Jean**
**105, rue de Folpersviller**
**F-57200 Sarreguemines(FR)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

(54) **Rundballenpresse mit wenigstens einem Zugmittel zum Bewegen von Pressgut.**

(57) Bei Rundballenpressen (10) kann das Zugmittel (20), das über Rollen (24) geführt und von dem Preßgut beaufschlagt wird, bei einer ungleichmäßigen Beschikkung eines Preßraums (18) unterschiedlich gespannt werden und infolge dessen von seiner normalen, längs gerichteten Bewegung abweichen.

Es ist eine Steuer- oder Regelvorrichtung (40) vorgesehen, die mittels Sensoren (42) eine Querbewegung des Zugmittels (20) feststellt und ein Ausgangssignal für ein Stellglied (44) bildet. Das Stellglied (44) lenkt eine Rolle (24) auf einer Seite aus ihrer Lage aus, so daß die Spannung des Zugmittels (20) über die gesamte Breite des Preßraums (18) gleich groß wird. Es kann somit auch ein Zugmittel (20) vorgesehen werden, das sich über die gesamte Breite des Preßraums (18) erstreckt.

Eine derartige Rundballenpresse (10) wird in der Landwirtschaft eingesetzt.

Die Erfindung betrifft eine Rundballenpresse mit wenigstens einem Zugmittel zum Bewegen von Preßgut zu oder in einem Preßraum und mit Rollen, über die das Zugmittel abläuft.

Rundballenpressen werden dazu verwendet, Preßgut aufzunehmen und dieses auf sich selbst aufzuwickeln. Derartige Rundballenpressen werden häufig in der Landwirtschaft zur Bergung von Stroh oder Heu eingesetzt, das in Schwaden auf dem Boden abgelegt ist. Die äußere Form des Rundballens hängt von der Gleichmäßigkeit der Zufuhr des Preßguts ab. Bei ungleichmäßiger Zufuhr von Preßgut erfolgt zudem eine einseitige Belastung des Zugmittels, das den Rundballen in Drehung versetzt, so daß sich neben der Bewegungskomponente in der Laufrichtung des Zugmittels eine quer dazu verlaufende Komponente ergibt, die das Zugmittel schräg laufen läßt. Ein derartiger Schräglauf des Zugmittels kann dazu führen, daß das Zugmittel reißt, oder, wenn mehrere Zugmittel parallel zueinander auf die Rollen aufgelegt sind, diese sich überkreuzen.

Aus der US-PS-4,224,867 ist es bekannt, die Form des Rundballens mittels Sensoren zu erfassen, die die Spannung des als Riemen ausgebildeten Zugmittels ermitteln, und mittels einer optischen oder akustischen Anzeige einer Bedienungsperson einen entsprechenden Hinweis über die Unförmigkeit des Rundballens geben. Die Bedienungsperson kann durch eine Änderung der Beschickung, z. B. in der Fahrweise, der Seite des Preßraums mehr Preßgut zuführen, der es an Preßgut mangelt.

Andererseits ist es bei einer Vielzahl nebeneinander verlaufender Riemen bekannt, zwischen den Riemen Führungsleisten vorzusehen, die zumindest ein Überschlagen benachbarter Riemen vermeiden.

Während Führungsleisten zu Schäden an den seitlichen Kanten des Zugmittels führen können, erfordert das Befolgen der Signale der ebenfalls bekannten Sensoren die ständige Aufmerksamkeit einer Bedienungsperson.

Die der Erfindung zugrunde liegende Aufgabe wird darin gesehen, eine Rundballenpresse zu entwickeln, deren Zugmittel stets in einer geraden Laufrichtung gehalten wird, ohne daß hierfür Führungsleisten verwendet werden oder die Beschickung des Preßraums ständig der Ballenform angepaßt werden muß.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird eine infolge einer ungleichmäßigen Beschickung aufgetretene Spannung des Zugmittels auf einer Seite des Preßraums durch eine entsprechende Verlagerung mindestens einer der Rollen entweder herabgesetzt, oder an der gegenüberliegenden Seite erhöht. Demnach tritt auf keiner Seite des Preßraums bei dem Zugmittel ein Bestreben auf, einer stärkeren Spannung auszuweichen, und das Zugmittel verläuft gerade. Dieser Vorteil kann an vielen Stellen einer Rundballenpresse und bei den verschiedensten Typen von Rundballenpressen erreicht werden. So kann die verstellbare Rolle an einem Zugmittel vorgesehen sein, das das Preßgut nur zu dem Preßraum befördert, wie an einem, das den gesamten Preßraum auf dem Außenumfang umgibt, wie an einem Zugmittel, das nur einen Teil des Umfangs des Preßraums bedeckt. Desgleichen kann es sich bei der Rundballenpresse um eine solche handeln, deren Preßraum in seiner Größe variabel ist, deren Preßraum in der Größe konstant ist, oder deren Preßraum aus einem variablen und einem konstanten Wandteil besteht.

Eine übermäßige Auslenkung des Zugmittels zur Spannungskompensation an einer Stelle wird vermieden, wenn mehrere Rollen radial verstellbar sind, von denen jede nur um einen Teilbetrag ausgelenkt wird.

Einen sehr großen Vorteil stellt es dar, wenn mit Hilfe der Erfindung nunmehr ein einziges Zugmittel verwendet werden kann, das nicht mehr aus einer Vielzahl von einzelnen nebeneinander verlaufenden Riemen besteht, sondern sich über die gesamte Preßraumbreite erstrecken kann. Ein derartiges als Riemen ausgebildetes Zugmittel stellt sicher, daß keine "Bröckelverluste" eintreten, d. h., daß nicht kleinflächige Erntegutbestandteile wie Blätter und Blüten durch Spalten zwischen Riemen auf den Boden fallen. Ist das Zugmittel als Kettenstrang ausgebildet, wird dessen Standzeit erhöht, weil Seitenkräfte nicht mehr auftreten, die die Gelenke und Glieder frühzeitig zerschleißen.

Aber auch dann, wenn mehrere parallel verlaufende Zugmittel den Preßraum umschließen, kann auf die Verwendung von Führungsleisten verzichtet werden; Führungsleisten stellen stets auch Sammelpunkte für mitumlaufendes Preßgut dar und können zu Verstopfungen führen.

Eine automatische und somit ohne Zeitverlust erfolgende und von der Konzentration der Bedienungsperson unabhängige Verstellung der Rolle(n) erfolgt, wenn eine Steuer- oder Regelvorrichtung verwendet wird, die aus dem Bewegungszustand des Zugmittels ein Signal ableitet und dieses in ein Ausgangssignal zum Verstellen der Rolle(n) umarbeitet.

Die Steuer- oder Regelvorrichtung läßt sich mit einem geringen Platzbedarf realisieren, wenn sie auf elektronischer Basis aufgebaut ist, und sie ist sehr anpassungsfähig, wenn interne Vorgänge zum Verarbeiten von Werten zum Bilden eines Ausgangssignals veränderbar, insbesondere programmierbar sind.

Die Unförmigkeit eines Rundballens kann an dem Zugmittel in einfacher Weise dadurch abgegriffen werden, daß entweder dessen Spannung oder dessen Seitwärtslauf festgestellt werden. Zur Messung der Spannung kann ein schwenkbar gelagertes Meßrad z. B. gemäß der US-PS-4,224,867 verwendet werden, dessen Auslenkung einen Meßwert ergibt. Zur Messung des Seitenlaufs des Zugmittels können berührungslose kapazitive Geber oder Berührungssensoren verwendet werden. Insbesondere eignen sich Linearpotentiometer.

Auch für das oder die Stellglieder kommen verschiedene Bauarten in Betracht, wobei die Auswahl von der zu erwartenden maximalen Kraft zum Auslenken der Rolle und der Verfügbarkeit von elektrischer, hydraulischer oder pneumatischer Energie abhängt. Eine einfache Ausführung eines elektrischen Verstellsignals läßt sich durch die Verwendung eines Elektromotors erreichen, der z. B. in einer Spindel-Mutter-Bauweise mit einer sehr geringen Steigung bei hoher Drehzahl eine hohe Kraft ausüben kann.

Eine Kraftverstärkung eines ansonsten schwachen Stellglieds kann auch durch die Verwendung eines Hebels, insbesondere eines Winkelhebels erbracht werden, der nach dem Verhältnis der Größe seiner Arme eine Übersetzung liefert.

Verkantungen zwischen einer Achse der Rolle(n) und dem Winkelhebel werden vermieden, wenn die Achse in dem Winkelhebel schwenkbeweglich gelagert ist.

Das Stellglied kann in einer einfachen Version so ausgebildet sein, daß es radial an der Achse der Rolle nur zieht oder diese nur schiebt, während die Bewegung der Achse in der anderen Richtung mittels eines Kraftspeichers, z. B. einer mechanischen Feder oder einem Gasspeicher, durchgeführt wird. Diese Ausführungsform führt auch dazu, daß nach einer Freigabe aller Stellglieder die Rolle(n) von den Kraftspeichern in eine im voraus definierbare Lage bewegt wird.

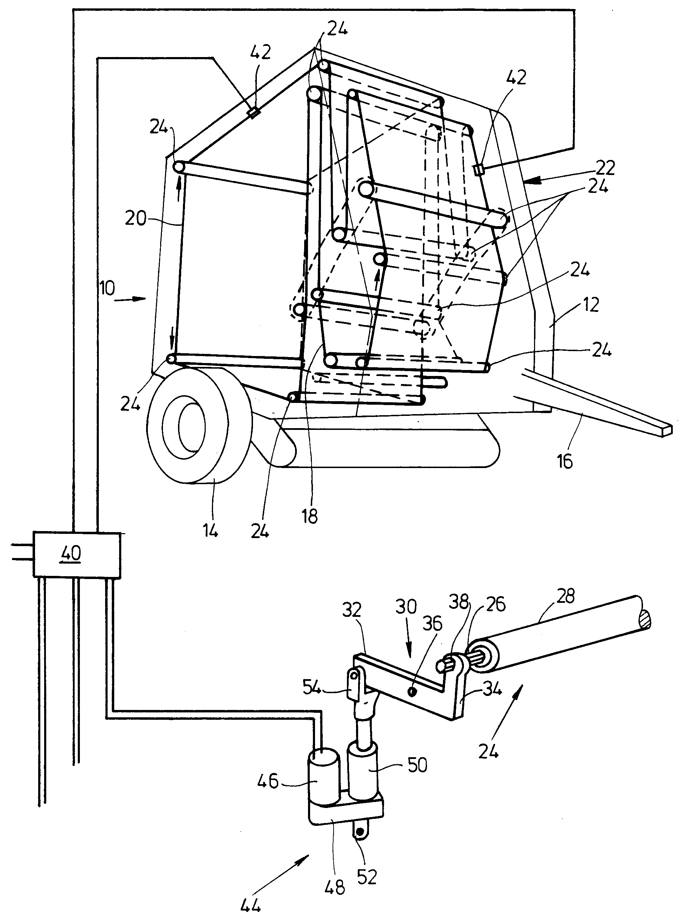

In der Zeichnung ist ein nachfolgend näher beschriebenes Ausführungsbeispiel der Erfindung dargestellt. Die einzige Figur zeigt eine Rundballenpresse in perspektivischer Seitenansicht mit einer Steuer- oder Regelvorrichtung.

Eine Rundballenpresse 10 gemäß der Zeichnung enthält einen Rahmen 12, der sich über Räder 14 auf dem Boden abstützt und mittels einer Deichsel 16 an ein nicht gezeigtes Zugfahrzeug, wie etwa einen Ackerschlepper, angehängt werden kann.

Diese Rundballenpresse 10 dient der Aufnahme und Verdichtung von Erntegut, das gewöhnlich auf dem Boden zur Trocknung abgelegt ist. Jedoch kann es sich um eine beliebige Art einer Rundballenpresse handeln, die z. B. auch Silage, Wolle oder andere landwirtschaftliche oder industrielle Güter zu Ballen preßt.

Der Rahmen 12 enthält in seinem Innern einen Preßraum 18, der umfangsmäßig größtenteils von einem Zugmittel 20 umgeben und stirnseitig von Seitenwänden 22 bedeckt wird.

Das Zugmittel 20 wird über eine Vielzahl von Rollen 24 geführt, die es mehrfach so umlenken, daß sich eine Schlaufe bildet, in der das Preßgut zwischen zwei Trums des Zugmittels 20 aufgerollt wird. Eine derartige Bauweise einer Rundballenpresse 10 ist hinlänglich bekannt und bedarf keiner weiteren Beschreibung.

Im Gegensatz zu bekannten Rundballenpressen weist das Ausführungsbeispiel ein Zugmittel 20 auf, das in seiner Breite den Preßraum 18 vollkommen überdeckt und somit kein kurzes Erntegut aus dem Preßraum 18 entfallen läßt. Es handelt sich bei dem Zugmittel 20 um einen in sich verstärkten beweglichen Riemen auf Gummibasis, der vorzugsweise auf seiner Oberfläche strukturiert ist.

Die Rollen 24, von denen bei einer derartigen Rundballenpresse 10 Stück vorgesehen sind, sind mit zueinander parallel verlaufenden Achsen 26 in oder an den Seitenwänden 22 angeordnet und liegen grundsätzlich radial fest. Einige der Rollen 24 sind auf einen nicht gezeigten, aber ebenfalls hinlänglich bekannten Träger aufgesetzt. Dieser Träger ist gegen die Kraft einer Feder schwenkbar, damit er infolge des sich beim Pressen vergrößernden Ballendurchmessers mit seinen Rollen 24 die Größe der Schlaufe und somit die des Preßraums 18 verändern kann.

Sowohl die in den Seitenwänden 22, wie auch die auf dem Träger gelagerten Rollen 24 sind in ihrer Lage gegenüber ihrer Befestigungsstelle nicht beweglich.

Einige der Rollen 24, z. B. die mit einem Pfeil markierten, weisen eine Befestigung auf, wie sie in dem unteren Teil der Zeichnung gezeigt ist. Hierzu erstrecken sich die Achsen 26 der betreffenden Rollen 24 axial über den eigentlichen Rollkörper 28 hinaus.

Zur Aufnahme der Achse 26 jeder Rolle 24 ist auf wenigstens einer der Seiten jeder verstellbaren Rolle 24 ein Winkelhebel 30 mit einem ersten und einem zweiten Schenkel 32 und 34 vorgesehen, die sich rechtwinklig zueinander erstrecken.

Von dem ersten Schenkel 32 erstreckt sich seitlich ein Lagerzapfen 36 fort, der in einer Seitenwand 22 oder in einem der vorbeschriebenen Träger drehbeweglich aufgenommen ist. Ferner ist in dem ersten Schenkel 32 eine Bohrung vorgesehen, die der später beschriebenen Verbindung mit einem Stellglied dient.

Der andere Schenkel 34 weist in seinem freien Endbereich ebenfalls eine Aufnahmeöffnung 38 auf, die in sich das freie Ende einer Achse 26 drehfest aufnimmt. Es ist erkennbar, daß bei einem Schwenkvorgang der Winkelhebel 30 um den Lagerzapfen 36 schwenkt und somit die Achse 26 und mit dieser die Rolle 24 radial verstellt werden.

Zwischen der Achse 26 und dem zweiten Schenkel 34 ist in die Aufnahmeöffnung 38 ein nicht gezeigtes Kugelgelenk eingesetzt, das es ermöglicht, daß die Achse 26 mit Bezug auf die Schenkel 32, 34 auch eine geneigte Haltung einnehmen kann, ohne daß es zu Verspannungen kommen würde.

Um eine Verstellung des Winkelhebels 30 zu bewirken, ist eine Steuer- oder Regelvorrichtung 40 vorgesehen, die eingangsseitig mit mehreren Sensoren 42 und ausgangsseitig mit einem oder mehreren Stellgliedern 44 verbunden ist.

Die Steuer- oder Regelvorrichtung 40 enthält vorzugsweise einen programmierbaren Kleinrechner, in dem Grenzwerte, Zeitverzögerungen oder sonstige Parameter für die Durchführung einer Verstellung einer Rolle 24 gespeichert werden können. Je nachdem, ob der infolge der Verstellung der Rolle 24 beabsichtigte Erfolg auch überwacht wird oder nicht, wird eine Steuer- oder eine Regelvorrichtung benutzt. Die Steuer- oder Regelvorrichtung 40 wird von einem Stromkreis mit elektrischer Energie versorgt und kann sich entweder ständig in Betrieb befinden oder von einer Bedienungsperson ein- bzw. ausgeschaltet werden. Zur Annahme bzw. Weitergabe von Signalen ist die Steuer- oder Regelvorrichtung 40 mit den Sensoren 42 und den Stellgliedern 44 über nicht näher bezeichnete elektrische Leitungen dauerhaft verbunden.

Die Sensoren 42 - bei diesem Ausführungsbeispiel sind es mehrere - können an nahezu beliebiger Stelle angeordnet sein und nach den verschiedensten Prinzipien arbeiten; gemein ist den verschiedenen Bauarten lediglich, daß sie fähig sind, an dem Zugmittel 20 einen Zustand zu erkennen, der geeignet sein könnte, einen Riemenlauf quer zur normalen Laufrichtung hervorzurufen. Dieser Zustand kann mittels eines Sensors 42 entdeckt werden, der auf die Spannung des Zugmittels 20 reagiert, wenn es sich in einem bestimmten Bereich mehr oder weniger spannt. Es kann ein Sensor 42 mit einer Kontaktplatte verwendet werden, die einen Stromfluß unterbricht oder öffnet, sobald sie von dem zur Seite wandernden Zugmittel 20 bewegt wird. In einem anderen Fall kann der Sensor 20 einen Geber enthalten, der Schall- oder Lichtwellen aussendet, die auf das Zugmittel auftreffen oder an ihm vorbei gelangen und deren Empfang von einem Empfänger ausgewertet wird. In dem bevorzugten Ausführungsbeispiel sind zwei als Linearpotentiometer ausgebildete Sensoren 42 vorgesehen, die sich an sich gegenüberliegenden Seitenkanten des Zugmittels 20 befinden. Einer der Sensoren 42 überwacht den Lauf des Trums des Zugmittels 20 zwischen dem Preßraum 18 und der Deichsel 16, während der andere Sensor 42 den Lauf des Trums zwischen dem Preßraum 18 und dem rückwärtigen Ende der Rundballenpresse 10 überwacht. Es wird dabei die Bewegung des Teils der Trums des Zugmittels 20 überwacht, der nicht unmittelbar von dem Rundballen beaufschlagt ist, da sich im allgemeinen dieser Teil zur Seite bewegt, während der von dem Rundballen beaufschlagte Teil der Trums zu fest an die Rollen 24 gedrückt wird.

Die Stellglieder 44 sind in diesem Ausführungsbeispiel als Linearmotoren ausgebildet, die elektrisch, hydraulisch oder pneumatisch verstellt werden können. Für jede einen- oder beidenends auszulenkende Rolle 24 ist ein Stellglied 44 erforderlich. Um eine einfache Ansteuerung durch die Steuer- oder Regelvorrichtung 40 zu ermöglichen, kann entweder ein Elektromotor oder ein Elektromagnetventil verwendet werden. Je nach der gewählten Bauart kann sich das Stellglied 44 auch aus einem Motor 46, einem Untersetzungsgetriebe 48 und einem Spindeltrieb 50 zusammensetzen; in jedem Fall ist bei dem bevorzugten Ausführungsbeispiel das Stellglied 44 in einem Gelenk 52 beweglich an dem Rahmen 12 oder den Seitenwänden 22 gelagert und kann sich so während des Schwenkens des Winkelhebels 30 in seiner Neigung anpassen. Das Stellglied 44 greift über eine Gabel 54 in der Bohrung an dem ersten Schenkel 32 des Winkelhebels 30 schwenkbar an und vermag diesen um dessen Lagerzapfen 36 zu verschwenken. Eine Linearbewegung des Stellglieds 44 führt demnach zu einem Schwenken des Winkelhebels 30 um den Lagerzapfen 36 und eine entgegengerichtete im wesentlichen lineare Auslenkung des Endes der Achse 26 der betreffenden Rolle 24, über die das Zugmittel 20 abrollt.

In einer einfachen Bauweise ist nur auf einer Seite der Rolle 24 ein Stellglied 44 vorgesehen, das die Rolle 24 oberhalb und unterhalb einer Neutralstellung bewegen kann. Gemäß einer anderen Variante ist auf jeder Seite der Rolle 24 ein Stellglied 44 vorgesehen, das die Rolle 24 aus einer Neutralstellung in einer Richtung bewegt.

Ist ein Stellglied 44 vorgesehen, das nur in einer Richtung wirkt und mittels einer externen Kraft in eine Ruhestellung zurückbewegt wird, kann eine zusätzliche Feder vorgesehen werden, falls die dem Zugmittel 20 innewohnende Spannkraft hierzu nicht ausreicht.

Gemäß dem vorgenannten ergibt sich folgende Funktion.

Um aus Preßgut einen Rundballen zu pressen, wird die Rundballenpresse 10 von einem Ackerschlepper angetrieben, d.h. die Rollen 24 werden in Drehung versetzt und erlegen dem Zugmittel 20 eine Längsbewegung auf. Anschließend wird die Rundballenpresse 10 über ein Feld bewegt und nimmt dabei Preßgut vom Boden auf und führt es in den Preßraum 18, wo es von dem Zugmittel 20 ergriffen und auf sich selbst aufgerollt wird. Während sich der Außendurchmesser des Rundballens innerhalb des Preßraums 18 stetig vergrößert, nimmt die Spannung auf das Zugmittel 20 zu. Solange das Preßgut gleichmäßig über die Breite des Preßraums 18 zugeführt wird, ist die Spannung des Zugmittels 20 auch über die gesamte Breite des Preßraums 18 im wesentlichen gleich. Nachdem die Drehachsen der Rollen 24 in der noch gegebenen Normalstellung zueinander parallel verlaufen, bewegt sich das Zugmittel 20 auch nur in seiner geraden Laufrichtung.

Bei einer ungleichmäßigen Zufuhr von Preßgut in den Preßraum 18 gerät das Zugmittel 20 auf einer seiner Seiten unter eine größere Spannung als auf seiner anderen Seite. In seinem Bestreben, dieser erhöhten Spannung auszuweichen, versucht das Zugmittel 20, sich quer zu seiner normalen Laufrichtung zu verlagern. Die erhöhte Spannung des Zugmittels 20 oder dessen Seitwärtsbewegung wird von den Sensoren 42 erfaßt und an die Steuer- oder Regelvorrichtung 40 weitergemeldet. Dort wird nach einer bestimmten Schaltung oder einem bestimmten Algorithmus ein Ausgangssignal für wenigstens eines der Stellglieder 44 gebildet und diesem(n) zugeleitet. Je nach der Größe und der Richtung des ausgesandten Signals fährt der Spindeltrieb 50 die Gabel 54 ein oder aus und verschwenkt dabei den Winkelhebel 30 entsprechend. Infolge der Schwenkbewegung des Winkelhebels 30 wird die Rolle 24 an einer ihrer Seiten radial bewegt und nimmt dann eine Stellung ein, in der ihre Drehachse nicht mehr parallel zu denen der anderen Rollen 24 verläuft. Beispielsweise wird die Rolle 24 auf der Seite radial von dem Zugmittel 20 wegbewegt, wo das Zugmittel 20 der erhöhten Spannung unterliegt. Das gleiche Ergebnis ergäbe sich, wenn die Seite der Rolle 24 auf das Zugmittel 20 zubewegt werden würde, auf der eine geringere Spannung herrscht. Jedenfalls wird die Rolle 24 so bewegt, daß die Spannung über die gesamte Breite des Zugmittels 20 gleich ist, so daß eine Querbewegung nicht mehr auftritt. Nach dem Entdecken einer Querbewegung kann zunächst auch eine Querbewegung zur anderen Seite hin durch eine entsprechende Verstellung der Rollen 24 hervorgerufen werden, bevor eine über das Zugmittel 20 neutrale Spannung aufgebaut wird.

Sind mehrere Rollen 24 aus ihrer normalen Lage verstellbar gelagert, kann die Steuerung oder die Regelung derart durchgeführt werden, daß zunächst nur eine Rolle 24 verstellt wird und erst beim Ausbleiben des gewünschten Erfolges eine oder mehrere weitere Rollen 24 verstellt werden.

**Patentansprüche**

1. Rundballenpresse (10) mit wenigstens einem Zugmittel (20) zum Bewegen von Preßgut zu oder in einem Preßraum (18) und mit Rollen (24), über die das Zugmittel (20) abläuft, dadurch gekennzeichnet, daß wenigstens eine der Rollen (24) mit Bezug auf die Laufrichtung des Zugmittels (20) wenigstens einenends radial verstellbar ist.

2. Rundballenpresse nach Anspruch 1, dadurch gekennzeichnet, daß mehrere Rollen (24) radial verstellbar sind.

3. Rundballenpresse nach Anspruch 1 oder 2, dadurch gekennzeichnet, daß das Zugmittel (20) als ein einziger Riemen oder Kettenstrang ausgebildet ist, der sich über die gesamte Breite des Preßraums (18) erstreckt.

4. Rundballenpresse nach Anspruch 1 oder 2, dadurch gekennzeichnet, daß das Zugmittel (20) als mehrere nebeneinander angeordnete Riemen ausgebildet ist, die sich über die gesamte Breite des Preßraums (18) erstrecken.

5. Rundballenpresse nach einem oder mehreren der vorherigen Ansprüche, gekennzeichnet durch eine Steuer- oder Regelvorrichtung (40) mit wenigstens einem Sensor (42) zum Erfassen einer Seitwärtsbewegung oder einer Spannungsänderung des Zugmittels (20) und einem Stellglied (44) zur Radialverstellung der Rolle (24).

6. Rundballenpresse nach Anspruch 5, dadurch gekennzeichnet, daß die Steuer- oder Regelvorrichtung (40) einen elektronischen Kleinrechner enthält.

7. Rundballenpresse nach Anspruch 6, dadurch gekennzeichnet, daß der Kleinrechner programmierbar ist.

8. Rundballenpresse nach Anspruch 5, dadurch gekennzeichnet, daß der Sensor (42) auf eine Spannungsänderung des Zugmittels (20) reagiert.

9. Rundballenpresse nach Anspruch 5 oder 8, dadurch gekennzeichnet, daß der Sensor (42) auf eine Bewegung des Zugmittels (20) quer zu seiner Laufrichtung reagiert.

10. Rundballenpresse nach einem oder mehreren der vorherigen Ansprüche 5, 8 oder 9, dadurch gekennzeichnet, daß der Sensor (42) als Linearpotentiometer ausgebildet ist.

11. Rundballenpresse nach Anspruch 5, dadurch gekennzeichnet, daß das Stellglied (44) als elektrischer, pneumatischer oder hydraulischer Linearmotor ausgebildet ist.

12. Rundballenpresse nach Anspruch 5 oder 11, gekennzeichnet durch einen Winkelhebel (30), an dessen einem Schenkel (32) das Stellglied (44) und an dessen anderem Schenkel (34) eine Achse (26) der Rolle (24) angreift.

13. Rundballenpresse nach Anspruch 12, dadurch gekennzeichnet, daß die Achse (26) über ein Kugelgelenk in dem anderen Schenkel (34) schwenkbeweglich gelagert ist.

14. Rundballenpresse nach einem oder mehreren der vorherigen Ansprüche 5 und 11 bis 13, dadurch gekennzeichnet, daß das Stellglied (44) nur in einer Richtung wirkend ausgebildet ist und die Bewegung der Rolle (24) in eine andere Richtung mittels eines Kraftspeichers, insbesondere mittels einer mechanischen Feder, durchgeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 092 914  (D.E. BURROUGH et al.) * Spalte 3, Zeile 53 - Spalte 4, Zeile 19; Zusammenfassung; Abbildungen 2,4,5,7 * --- | 1,2,4 | A 01 F  15/08 A 01 F  15/07 |
| D,A | US-A-4 224 867  (M.V. GAEDDERT et al.) * Spalte 3, Zeile 43 - Spalte 4, Zeile 56; Abbildungen * ----- | 1,4,5,8 ,12,14 | |

| | | | RECHERCHIERTE SACHGEBIETE (Int. Cl.5) |
|---|---|---|---|
| | | | A 01 F |

Der vorliegende Recherchenbericht wurde für alle Patentansprüche erstellt

| Recherchenort | Abschlußdatum der Recherche | Prüfer |
|---|---|---|
| BERLIN | 29-04-1992 | MARTIN DEL RIO A |